# EUROPEAN PATENT SPECIFICATION

(11) **EP 1 253 770 B1**
(45) Date of publication and mention of the grant of the patent: **07.02.2007**
(21) Application number: 02396059.4
(22) Date of filing: 26.04.2002
(51) Int. Cl.: H04M 3/487, H04L 12/18, H04L 29/06, H04Q 7/22, H04M 7/00

(54) **System for sending group announcements**
System zur Gruppenansagenübertragung
Système de transmission d'annonces de groupe

(30) Priority: 27.04.2001 FI 20010880
(43) Date of publication of application: 30.10.2002
(73) Proprietor: Nokia Corporation, 02150 Espoo (FI)
(72) Inventor: Kinnunen, Kimmo, 44100 Äänekoski (FI)
(74) Representative: Helke, Kimmo Kalervo

(56) References cited:
- WO-A-00/30375
- BETTSTETTER ET AL: "GSM Phase 2+: General Packet Radio Service GPRS: Architecture, Protocols and Air Interface" IEEE COMMUNICATIONS SURVEYS, vol. 2, no. 3, 1 July 1999 (1999-07-01), pages 2-14, XP002254902
- SCHOLEFIELD C: "Evolving GSM data services" 1997 IEEE 6TH. INTERNATIONAL CONFERENCE ON UNIVERSAL PERSONAL COMMUNICATIONS RECORD. SAN DIEGO, 12 - 16. OCT. 1997, IEEE INTERNATIONAL CONFERENCE ON UNIVERSAL PERSONAL COMMUNICATIONS, NEW YORK, IEEE, US, vol. 2 CONF. 6, 12 October 1997 (1997-10-12), pages 888-892, XP010248834 ISBN: 0-7803-3777-8
- BRASCHE G ET AL: "CONCEPTS, SERVICES, AND PROTOCOLS OF THE NEW GSM PHASE 2+ GEBERAKL PACKET RADIO SERVICE" IEEE COMMUNICATIONS MAGAZINE, IEEE SERVICE CENTER. PISCATAWAY, N.J, US, vol. 35, no. 8, 1 August 1997 (1997-08-01), pages 94-104, XP000704443 ISSN: 0163-6804
- DEWEY R ET AL: "Performance studies of the TETRA mobile radio system" VEHICULAR TECHNOLOGY CONFERENCE, 1996. MOBILE TECHNOLOGY FOR THE HUMAN RACE., IEEE 46TH ATLANTA, GA, USA 28 APRIL-1 MAY 1996, NEW YORK, NY, USA,IEEE, US, 28 April 1996 (1996-04-28), pages 1165-1169, XP010162573 ISBN: 0-7803-3157-5

## Description

The present invention relates to a system for sending group messages which system includes a network infrastructure, in which the parties of the system are also the sender, who has means for sending group messages, and several recipients, each of whom has a terminal for receiving group messages, and in which said network infrastructure
- the recipient sets their terminal to listen to the group they select,
- the sender sends an identifier corresponding to the group,
- the terminal of the recipient receives the said identifier and sets itself into a state corresponding to the transmission information defined in the identifier,
- the sender sends a group message using the settings stated in the identifier and
- the terminal of the recipient receives and announces the arrival of the group message.

Group communication is one of the most effective ways of distributing information to even large groups of people. One examples of such communications procedures targeting large groups are the text-based NEWS message system implemented globally in the Internet, in which each recipient subscribes to receive messages from subject groups they are interested in, and, if they wish, to participate in the discussion. Another example of a message service targeting groups is a telecommunications operator's sports results system, through which motor sport lap time results are transmitted during a race, utilizing text-based GSM-SMS technology. Such group communications services based on a text format readable from a recipient's terminal device are suitable for real-time information distribution (such as in the NEWS system) or for the distribution of short information package format messages (such as in the SMS sports results service).

The present mobile communications terminals used in public service are largely based on the GSM standard, in which the SMS (Short Message Service) messages being transmitted are text based and always require the user to perform operations to open the messages. This means that text messages are the most effective group-message transmission facilities that GSM technology can provide. At present, it is, for example, possible to receive ice-hockey match and car rally intermediate time results as SMS messages. However, from the user's point of view, the continual real-time reception of such messages is inconvenient, because every time a message arrives the user must unload it onto the display of their terminal. At the same time, messages arriving in rapid succession take up unnecessarily the small and limited memory capacity of terminal devices. From the user's point of view, it is usually irrelevant to save such 'disposal', news-type messages; instead bringing the user's attention to the messages immediately upon reception would substantially increase the operating convenience of the service, for example, in traffic or other situations, in which the recipient cannot continually operate the terminal.

Precision messages concerning simple and rapidly changing situations are effective and user-friendly. Examples of such precision messages are weather and traffic congestion reports, news, financial market reports, and generally all kinds of information that at present is transmitted by radio as real-time news. The usability of such information depends on the delay in bringing it to the attention of the user and on the geographical location of the user in relation to the precise area that the information sent concerns. The recipient must be able to obtain information independently of time and, on the other hand, without being bound to a specific location. In addition, it must be possible for the recipient to select which messages they wish to receive, depending on time and their location.

At present, such group messages, targeting defined and limited groups, are known, for example, from the system according to the TETRA standard, in which a terminal can be set to scan several groups simultaneously. Further, the groups can be prioritized in a reception order, which permits listening to the most important group at any specific time. The TETRA system permits the dynamic processing of the groups, while it is possible to use a terminal conforming to corresponding standards to receive dynamic group addresses and to listen to the corresponding groups. In the TETRA system, which is in general use by officials and the public sector, an operator on duty in a centralized communications centre assembles groups from units moving in the field, such as police patrols, according to the current requirements. As is known, the operation takes place within a TETRA network and is thus centrally controlled and closed.

Some prior art solutions which relate to group calls have been introduced in WO-publication 00/30375 and to telecommunications information broadcast services in WO-publication 97/41654.

Also cited as prior art is WO-publication 01/67787 A2 (Qual-comm, Inc.), which discloses a method and apparatus for participating in PoC (Professional over Cellular) group communication services. In it, the IP-network incorporates a system operator, which is provided with an interface that permits extensive and effective operating possibilities for controlling group communication services. Thus, the powerful end-user solution disclosed in this publication is not suitable for customers subscribing to group message services.

The present invention is intended to create a system, by means of which a recipient can subscribe to group message services, which refers to both group speech services and group data services, for their own terminal. The system according to the invention is characterized by the fact that the system includes, in addition to a network infrastructure, the sender, and several recipients also a second network, a group message subscription application in the second network (IP) that is separate from the network infrastructure, as well as a group communication interface (Group Communication API) belonging to the network infrastructure, and a gateway, which creates a connection between the IP network connected group message subscription application and the said group communication interface. In addition, in the system the terminal of the recipient is able to communicate with the subscription application that is connected to the said second network and which communication is performed via a LAN/IP interface included in the system and connected to the second network by means of a second gateway. The other features of the system according to the invention are stated in the accompanying Claims.

The system according to the invention permits subscription to and the use of organization or person-specific, group message services, received as real-time sound messages. The system according to the invention makes possible a terminal, with rapid scanning facilities (for example, a TETRA telephone). In addition, a network infrastructure according to the system requires the use of dynamic group addresses and transmission of subscriber information. Such features can be found in at least the EDGE, 3G (e.g., UMTS), and TETRA networks, in which simplex multicasting (Multicast IP) and VOIP technology can be utilized to effectively implement a group-call speech service. In the system according to the invention, according to a first preferred embodiment, the contents of the group messages can be created under centralized control from a single location (such as a traffic congestion or weather service), or, according to a second preferred embodiment, in which each of the recipients connected to the group, in which the group consists of, for example, the members of a corporate organization, can create short bulletins (for example, on traffic congestion) in field conditions. By means of the system according to the invention, it is possible to transmit real-time messages and news over the air significantly more effectively than by using the present technology. A corporate organization can place a group-message subscription preferably using a Web browser through an IP network (for example, the Internet), for the terminals of its employees. A single recipient can easily subscribe to a service, for example, by using the WAP browser of their terminal, or in some other known manner.

By means of the system according to the invention, the speech-based group messages to be received do not consume the limited memory of the terminal and do not require operations by the recipient for the unloading of the messages. In addition to this, the use of the network infrastructure becomes more efficient, because the same message can be transmitted to several recipients by reserving only a single frequency for use.

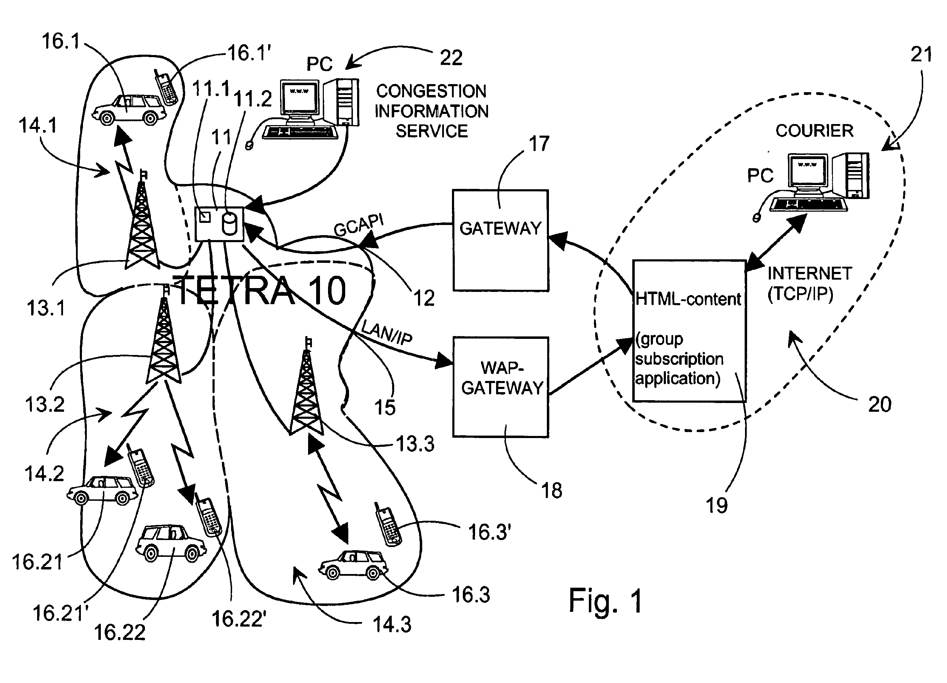

The system according to the invention, the operation of which is not limited to the network infrastructure using in the following examples, is examined in greater detail with reference to the accompanying drawing, in which
Figure 1 shows a schematic diagram of the system according to the invention.

A schematic diagram of the system according to the invention is shown in Figure 1. An essential part of the operation of the system is a network infrastructure 10, which is preferably according to, for example, the EDGE or 3G standard, or similar. One example of a network according to the 3G standard is a UMTS network. An essential feature of the network infrastructure 10 is the fact that it has facilities for processing dynamic groups, i.e., for example, the possibility to create groups and remove them, as well as to add or remove recipients from the said dynamic groups, and to transmit subscriber information through an interface 12, the operation of which is examined later. Further, the processing of dynamic groups permits the use of dynamic group addresses, on the basis of which group messages are transmitted to the recipients who have subscribed to them. In the following, the operation of the invention is examined both on a general level, without commitment to any specific example of a network infrastructure, and as an individual application example, in which a network infrastructure 10, which has also the said dynamic groups processing facilities, according to the TETRA standard, is used in the reception of group messages.

In the TETRA network used as an example of a network infrastructure there are interfaces, which permit the use of the system according to the invention. The first interface is the so-called group interface GCAPI 12 (Group Communication API), through which the TETRA network 10 is connected through a GATEWAY 17 to a TCP/IP network 20, which is essentially separate from the TETRA network 10. Any other IP network can be used in place of the TCP/IP network 20. In cases in which the network infrastructure 10 is IP based (VOIP service in use), the GCAPI 12 can be an application responsible for multicast transmission. A hypertext-based group message subscription application 19 implemented by means of HTML or a similar (e.g. XML) technology, which contains linked elements, is connected to the TCP/IP network 20. The GCAPI multicasting interface 12 permits, among other things, the processing of dynamic groups (DGNA) and the transmission of subscriber information. The gateway 17 is used to handle the conversion of data format between the TETRA network 10 and the TCP/IP network 20. The TCP/IP network 20 can be preferably, for example, the Internet, or an intranet or extranet network.

Preferably a second interface LAN/IP, which is marked with the reference number 15, of the TETRA network 10, is used, through which the WAP traffic to the TCP/IP network 20 of the terminals 16.1', 16.21', 16.22', and 16.3' in the TETRA network 10 is handled. The data format conversion between the TETRA network 10 and the TCP/IP network 20 is carried out by the WAP gateway 18 between them.

By means of the TCP/IP network 20, the subscription application 19 receives group message subscriptions, which are placed, for example, by an organization 21 that desires group-message services, preferably with the aid of a Web browser in a terminal connected to the TCP/IP network 20. The subscription can be transmitted to the operator maintaining the whole system, equally well by telephone too, or in other known manners (not shown).

In the TETRA network 10, there is a centre 11, which controls traffic in the network 10 in an known manner. The dynamic group addresses (DGNA) 11.1 currently in use are allocated to the centre 11 and information on the recipients 11.2 currently belonging to the group are transmitted to it from the subscription application 19. Transmission of the information takes place by using the gateway 17 and a GCAPI interface 12.

The operation of the system described is the responsibility of, for example, a service provider, preferably a telecommunications operator, which operates the system shown in Figure 1, except for the production of the information. The informative data required to produce the service are provider for the operator, for example, by companies 22 producing weather, traffic congestion, and news information. According to one preferred embodiment, a single organization can also gather its own group from its employees and transmit bulletins on a desired subject to its employees (not shown) as group messages.

The system according to the invention is examined in the following as a single application example, from the point of view of a company 21 called COURIER, which operates in an urban area and wishes to use the system according to the invention to transmit information on traffic congestion its courier drivers 16.1, 16.21, and 16,22. The company 21 is connected to a telecommunications operator providing group message services, which can either produce the group message services itself, or subscribe for them from an external service provider 22 (CONGESTION INFORMATION SERVICE). The company 21 informs the operator of the service it wishes and the identifiers of the recipients' terminals 16.1'. 16.21', 16.22', in which it is desired to receive group messages giving the relevant congestion information. In the case according to the example, the service is subscribed to through a TCP/IP network (Internet), in the telecommunications operator's subscription application 19.

The TETRA centre 11 sends the congestion information to the allocated corresponding group address (TETRA DGNA, [Dynamic Group Number Assignment]) to each of the group's notified recipients 16.1., 16.21, 16,22, in which case the terminals 16.1', 16.21', 16.22' of the recipients 16.1, 16.21, 16.22 save it in their memories. The couriers who have received the group address activate the relevant group address from their terminals and begin to receive the congestion information, which, for example, the company CONGESTION INFORMATION SERVICE 22, specializing in transmitting traffic congestion information, transmits through the centre 11.

If several groups, for example, groups for congestion and weather information, are subscribed to for the recipient 16.1, 16.21, 16.22, then the recipient 16.1, 16.21, 16,22 can activate the scanning facility of their terminals 16.1', 16.21', 16.22', in which case, when the terminal detects transmission operations in some group that has been subscribed to and activated, the terminal tunes to settings corresponding to the identifier of the group and receives the group message. If several groups have been subscribed to for the recipient 16.1, 16.21, 16.22, it is then possible, according to the known TETRA standard, to prioritize the groups subscribed to in order of importance, in which case the group address set with a higher priority will move to receive messages addressed to the relevant group in the terminal 16.1', 16.21', 16.22' of the recipient 16.1, 16.21, 16.22.

The centre 11 sends an identifier corresponding to each group message to a so-called call channel, in which all the terminals 16.1', 16.21', 16.22' are on alert in normal operation. The identifier includes at least information on the time of transmission of a group message being sent and on the group address, to which the group message is being sent. The terminals 16.1', 16.21', 16.22' of the customers who have subscribed to the group notified in the identifier then switch to the transmission frequency stated in the identifier, receive the group message subscribed to and bring it to the attention of the recipient, by means of loudspeaker devices installed in the vehicle.

Further, the recipient 16.1, 16.21, 16.22 has, according to the known TETRA standard, the ability to terminate the reception of group messages transmitted to a specific group, both temporarily and permanently. The reception settings of a temporarily blocked group remain in the memory of the terminal, but when the setting is active the terminal does not react, if a message is sent to the relevant blocked group. Despite the blocking of group messages, the reception of SMS message can continue to be kept active. The reception of the blocked group can be reactivated by altering the settings of the terminal to permit reception. All the other known facilities of TETRA terminals are also available when receiving group messages (single message blocking, loudspeaker activation/deactivation, and group scanning on/off setting (permanent)). The recipient must also know when the group message service is available and when it is unavailable. In the TETRA network 10, the groups availability information is preferably given to the terminal, so that it is also displayed to the recipient.

Even while driving, a recipient 16.3 can easily subscribe to a service they want, for example, by using their own terminal 16.3', which is preferably equipped with, for example, a WAP browser, or with a corresponding device able to communicate similarly to the WAP standard. The subscription travels through the TETRA base station 13.3 to the centre 11, from where it is forwarded through a LAN/IP interface 15 over a second WAP gateway 18 to the subscription application 19 connected to the TCP/IP network 20. The operator attaches the information on the subscribing recipient 16.3 to the subscription group which has subscribed in the subscription application 19 and sends the recipient's 16.3 terminal 16.3' confirmation of the subscription to the service to the operating group address, which permits the reception of group messages intended for the subscribing group. After this, the recipient 16.3 activates the service in their terminal 16.3' and can begin to receive group messages in the manner describer above. The recipients can also use their WAP browser to add/remove members, in the case of groups that they themselves have created.

When using a TETRA network according to the embodiment, the group message service is fast and in real-time, because the setting time of a TETRA terminal is short (about 300 ms). The system is also effective, because, in a TETRA network, a group call is sent using the baseband. The sending of group messages can also be restricted to a specific geographical area, because the group messages to be sent (for example, in the case of weather and traffic congestion bulletins) only concern recipients within the area of a single base station. The distribution can take place preferably either according to base stations 13.1, 13.2, 13.3, or the smallest addressable unit (Location Area LA), which can include several base stations. When the recipient 16.22 moves their location from the area of the present base station 13.3 to the area of, for example the base station 13.3, their terminal 16.22' switches to receive from the base station 13.3, in which case the messages to be received by the terminal 16.22' also change to become geographically relevant. Thus, in the system, it is possible to form the transmission areas of the group messages in such a way that specific group messages are transmitted to selected base stations 13.1, 13.2, 13.3. If, in the area of the base station, there is no recipient who has subscribed to the relevant group-message service, messages intended to be transmitted to the group and area in question are not sent at all to the relevant base station. This makes the system more efficient, as the limited frequency spectrum is not unnecessarily taken up for sending messages that have no recipient in the area of the relevant base station. The TETRA system makes it possible to arrange the group area, either as a geographically fixed entity, or as variable, based on the current location of the recipients in relation to the base stations 13.1, 13.2, 13.3. In the system according to the invention, it is also possible to limit the number of recipients on the basis of a selected criterion (closed group), for example individual person/organization specifically. Limitations can also preferably be set by the recipients, using their WAP or Web browsers.

The recipients' terminals are preferably connected to loudspeaker devices or similar, in order to listen in real time to group messages received as speech messages. Charging for the service can be implemented on the flat-rate principle, in which case the organization subscribing to the service is charged according to the number of subscribed recipients. Another charging alternative could be charging based on traffic (organization/end-user), which is based on the number of messages sent and/or geographical criteria - over how extensive an area the messages have been sent, depending on the location of the recipients. Charging takes place preferably by the operator charging the customer, according to the above criteria, either in the network infrastructure 10, or in the TCP/IP network 20, and the company producing the group messages in turn charging the operator, based on the number of group messages transmitted.

The system according to the invention is effective, both for the operator and for the recipient. The system according to the invention can be advantageously used, for example, by courier services, taxis, etc. The use of group addresses is efficient in terms of communication, while the reception of speech messages is user-friendly and safe, for example, while driving in traffic. The network infrastructures implementing the system according to the invention permit one-way communications, in which it is possible to operate without a receipt of reception of a message having to be given by the recipient. The efficiency is also increased by the fact that, if there are no recipients subscribing to the service in the area of a base station, messages are not sent to that base station. The terminal implementing the system permits a wide variety of known facilities for listening to messages.

The system according to the invention is excellently suited to the transmission of real-time messages. Such messages give information on, for example, traffic congestion, weather reports, or sports results, the informative value of which is momentary. It is unnecessary to save such messages in the telephone device after reception.

## Claims

1. A system for pending group messages which system includes a network infrastructure (10), in which the parties of the system are the sender, who has means for sending group messages, and several recipients (16.1, 16.21, 16.22, 16.3) each of whom has a terminal (16.1', 16.21', 16.22', 16.3') for receiving group messages, and in which said network infrastructure (10)
- the recipients set their terminals to listen to the group they select,
- the sender sends an identifier corresponding to the group,
- the terminals of the recipients receive the said identifier and set themselves into a state corresponding to defined setting in the identifier,
- the sender sends a group message using the settings stated in the identifier,
- the terminals of the recipients receive and announce the arrival of the group message,
**characterized in that** the system includes in addition
- a second network (20) separate from the said network infrastructure (10)
- a subscription application (19) in the second network, arranged to subscribe recipient (16.1, 16.21, 16.22, 16.3) to groups and to remove recipients (16.1, 16.21, 16.22, 16.3) from groups,
- a group communication interface (12) and a LAN/IP interface (15) belonging to the network infrastructure (10),
- a gateway (17), which creates a connection between the group-message subscription (19) and the said group communication interface (12), and
a second gateway (18) which creates a connection between said second network (20) and said LAN/IP interface (15),
in which the terminal (16.1') of the recipient (16.1) is able to communicate with the subscription application (19), which communication is performed via a LAN/IP interface (15).

2. A system according to Claim 1, **characterized in that** the said network infrastructure (10) has facilities for at least handling dynamic groups and for transmitting subscriber information through the said group communication interface (12).

3. A system according to Claim 1 or 2, **characterized in that** the said second network (20) is an IP network.

4. A system according to any of claims 1 - 3, **characterized in that** the transmission of the group messages is arranged to take place base-station-specifically (13.1, 13.2, 13.3).

5. A system according to any of Claims 1 - 4, **characterized in that** loudspeaker devices for receiving speech messages are arranged in the terminals of the recipients.

6. A system according to any of Claims 1 - 5, **characterized in that** the number of recipients (16.1, 16.21, 16.22, 16.3) can be adjusted on the basis of a selected criterion.

7. A system according to any of Claims 1 - 6, **characterized in that** the recipients (16.1, 16.21, 16.22, 16.3) can use their terminal (16.1', 16.21' ; 16.22', 16.3') to control the reception of group messages.

8. A system according to any of Claims 1 - 7, **characterized in that** the provision of group messages to the network infrastructure (10) is performed by an external service provider (22)

9. A system according to any of Claims 1 - 8, **characterized in that** the subscription of the recipients to group messages is arranged to take place in the said second network (20).

10. A system according to any of Claims 1 - 9, **characterized in that** it is arranged for an operator to perform charging, either in the network infrastructure (10), or in the said second network (20).

11. A system according to any of Claims 1 - 10, **characterized in that** the subscription application (19) is implemented using HTML or a similar technology.

12. A system according to any of Claims 1 - 11, **characterized in that** the terminals of the recipients are able to communicate according to the WAP standard.

13. A system according to any of Claims 1 - 12, **characterized in that** the sender is an operator.

## Patentansprüche

1. Zum Versenden von Gruppennachrichten dienendes, eine Netzinfrastruktur (10) enthaltendes System, das als Teilnehmer einen Versender, der über Mittel zum Versenden von Gruppennachrichten verfügt, und mehrere Empfänger (16.1, 16.21, 16.22, 16.3), deren jeder über ein Endgerät (16.1', 16.21', 16.22', 16.3') zum Empfangen von Gruppennachrichten verfügt, hat, wobei in der besagten Netzinfrastruktur (10)
- die Empfänger ihr Endgerät auf Abhören der von ihnen gewählten Gruppe stellen,
- der Versender die der Gruppe entsprechende Kennung sendet,
- die Endgeräte der Empfänger die besagte Kennung empfangen und sich selbst in einen den in der Kennung definierten Einstellungen entsprechenden Status versetzen,
- der Versender die Gruppennachricht mit den in der Kennung angegebenen Einstellungen sendet,
- die Endgeräte der Empfänger die Gruppennachricht empfangen und deren Eintreffen anzeigen,
**dadurch gekennzeichnet, dass** das System
- eine zweites, von der besagten Netzinfrastruktur (10) getrenntes Netz (20),
- eine in dem zweiten Netz (20) vorhandene Abonnementsoftware (19) zur Aufnahme von Empfängern (16.1, 16.21, 16.22, 16.3) in Gruppen und zum Entfernen von Empfängern (16.1, 16.21, 16.22, 16.3) aus Gruppen,
- eine zur Netzinfrastruktur (10) gehörende Gruppenkommunikations-Schnittstelle (Group Communication API) (12) und eine LAN/IP-Schnittstelle (15),
- ein Gateway (17) zur Herstellung der Verbindung zwischen der Gruppennachricht-Abonnementsoftware (19) und der besagten Gruppenkommunikations-Schnittstelle (12) und
- ein zweites Gateway (18) zur Herstellung der Verbindung zwischen dem besagten zweiten Netz (20) und der besagten LAN/IP-Schnittstelle (15)
umfasst, und in dem System das Endgerät (16.1') des Empfängers (16.1) zum Kommunizieren mit der Abonnementsoftware (19) ist und diese Kommunikation über die LAN/IP-Schnittstelle (15) erfolgt.

2. System nach Anspruch 1, **dadurch gekennzeichnet, dass** die besagte Netzinfrastruktur (10) Eigenschaften wenigstens zum Behandeln dynamischer Gruppen und zur Übermittlung der Abonnenteninformation über die besagte Gruppenkommunikations-Schnittstelle (12) aufweist.

3. System nach Anspruch 1 oder 2, **dadurch gekennzeichnet, dass** das besagte zweite Netz (20) ein IP-Netz ist.

4. System nach irgendeinem der Ansprüche 1 bis 3, **dadurch gekennzeichnet, dass** das Übermitteln der Gruppennachrichten basisstationsspezifisch (13.1, 13.2, 13.3) erfolgt.

5. System nach irgendeinem der Ansprüche 1 bis 4, **dadurch gekennzeichnet, dass** die Endgeräte der Empfänger Lautsprechereinrichtungen zum Empfang von Sprachnachrichten haben.

6. System nach irgendeinem der Ansprüche 1 bis 5, **dadurch gekennzeichnet, dass** die Zahl der Empfänger (16.1, 16.21, 16.22, 16.3) der Gruppennachrichten an Hand eines gewählten Kriteriums reguliert werden kann.

7. System nach irgendeinem der Ansprüche 1 bis 6, **dadurch gekennzeichnet, dass** die Empfänger (16.1, 16.21, 16.22, 16.3) mit ihren Endgeräten (16.1', 16.21', 16.22', 16.3') den Empfang von Gruppennachrichten regulieren können.

8. System nach irgendeinem der Ansprüche 1 bis 7, **dadurch gekennzeichnet, dass** die Bereitstellung der Gruppennachrichten für die Netzinfrastruktur (10) von einem externen Dienstanbieter (Provider) (22) besorgt wird.

9. System nach irgendeinem der Ansprüche 1 bis 8, **dadurch gekennzeichnet, dass** die Subskription von Empfängern der Gruppennachrichten in dem besagten zweiten Netz (20) erfolgt.

10. System nach irgendeinem der Ansprüche 1 bis 9, **dadurch gekennzeichnet, dass** es für einen Operator eingerichtet ist, das Fakturieren entweder in der Netzinfrastruktur (10) oder in dem besagten zweiten Netz (20) durchzuführen.

11. System nach irgendeinem der Ansprüche 1 bis 10, **dadurch gekennzeichnet, dass** die Abonnementsoftware (19) unter Einsatz von HTML- oder entsprechender Technologie verwirklicht wurde.

12. System nach irgendeinem der Ansprüche 1 bis 11, **dadurch gekennzeichnet, dass** die Endgeräte der Empfänger nach dem WAP-Standard zu kommunizieren in der Lage sind.

13. System nach irgendeinem der Ansprüche 1 bis 12, **dadurch gekennzeichnet, dass** der Versender ein Operator (Netzbetreiber) ist.

## Revendications

1. Système pour envoyer des messages de groupe, qui comprend une infrastructure de réseau (10) et dont les parties sont un expéditeur, qui dispose de moyens d'envoyer des messages de groupe, et plusieurs destinataires (16.1, 16.21, 16.22, 16.3), dont chacun dispose d'un terminal (16.1', 16.21', 16.22', 16.3') pour recevoir des messages de groupe, infrastructure de réseau (10) dans laquelle
- les destinataires configurent leurs terminaux pour les mettre à l'écoute du groupe qu'ils ont choisi,
- l'expéditeur envoie un identifiant correspondant au groupe,
- les terminaux des destinataires reçoivent ledit identifiant et se placent dans l'état correspondant aux paramètres définis dans l'identifiant,
- l'expéditeur envoie un message de groupe en utilisant les paramètres indiqués dans l'identifiant,
- les terminaux des destinataires reçoivent le message de groupe et en annoncent l'arrivée,
**caractérisé par le fait que** le système inclut
- un second réseau (20) séparé de ladite infrastructure de groupe (10),
- un logiciel d'abonnement (19) dans le second réseau (20) conçu pour abonner les destinataires (16.1, 16.21, 16.22, 16.3) aux groupes et pour supprimer des destinataires (16.1, 16.21, 16.22, 16.3) des groupes,
- une interface d'expédition de groupe (12) faisant partie de l'infrastructure de réseau (10) et une interface LAN/IP (15),
- une passerelle (17) qui établit une liaison entre le logiciel d'abonnement de messages de groupe (19) et ladite interface d'expédition de groupe (12), et
- une seconde passerelle (18) qui établit une liaison entre ledit second réseau (20) et ladite interface LAN/IP (15), système dans lequel le terminal (16.1') du destinataire (16.1) est capable de communiquer avec le logiciel d'abonnement (19), la communication étant réalisée par l'intermédiaire de l'interface LAN/IP (15).

2. Système selon la revendication 1, **caractérisé par le fait que** ladite infrastructure de réseau (10) présente des caractéristiques lui permettant au moins de traiter les groupes dynamiques et de transmettre les données d'abonné par ladite interface d'expédition de groupe (12).

3. Système selon la revendication 1 ou 2, **caractérisé par le fait que** ledit second réseau (20) est un réseau IP.

4. Système selon l'une quelconque des revendications 1 - 3, **caractérisé par le fait que** la transmission des messages de groupe est conçue pour avoir lieu pour avoir lieu par point d'accès sans fil spécifique (13.1, 13.2, 13.3).

5. Système selon l'une quelconque des revendications 1 - 4, **caractérisé par le fait que** des haut-parleurs pour recevoir des messages vocaux sont disposés dans les terminaux des destinataires.

6. Système selon l'une quelconque des revendications 1 - 5, **caractérisé par le fait que** le nombre de destinataires des messages de groupe (16.1, 16.21, 16.22, 16.3) peut être réglé sur la base d'un critère sélectionné.

7. Système selon l'une quelconque des revendications 1 - 6, **caractérisé par le fait que** les destinataires (16.1, 16.21, 16.22, 16.3) peuvent utiliser leur terminal (16.1', 16.21', 16.22', 16.3') pour contrôler la réception des messages de groupe.

8. Système selon l'une quelconque des revendications 1 - 7, **caractérisé par le fait que** la fourniture de messages de groupe à l'infrastructure de réseau (10) est effectuée par un fournisseur de services externe (22).

9. Système selon l'une quelconque des revendications 1 - 8, **caractérisé par le fait que** l'abonnement aux messages de groupe par les destinataires (16.1) est conçu pour avoir lieu dans ledit second réseau (20).

10. Système selon l'une quelconque des revendications 1 - 9, **caractérisé par le fait qu'**un opérateur est chargé d'effectuer la facturation soit dans l'infrastructure de réseau (10) soit dans ledit second réseau (20).

11. Système selon l'une quelconque des revendications 1 - 10, **caractérisé par le fait que** le logiciel d'abonnement (19) met en oeuvre le langage HTML ou une technologie analogue.

12. Système selon l'une quelconque des revendications 1 - 11, **caractérisé par le fait que** les terminaux des destinataires sont capables de communiquer selon la norme WAP.

13. Système selon l'une quelconque des revendications 1 - 12, **caractérisé par le fait que** l'expéditeur est un opérateur.
